Europäisches Patentamt

(19) European Patent Office

Office européen des brevets

(11) EP 0 858 830 A1

(12) EUROPEAN PATENT APPLICATION

(43) Date of publication:
19.08.1998 Bulletin 1998/34

(51) Int. Cl.⁶: **B01J 19/32**

(21) Application number: 98102458.1

(22) Date of filing: 12.02.1998

(84) Designated Contracting States:
AT BE CH DE DK ES FI FR GB GR IE IT LI LU MC NL PT SE
Designated Extension States:
AL LT LV MK RO SI

(30) Priority: 13.02.1997 US 799328

(71) Applicant:
PRAXAIR TECHNOLOGY, INC.
Danbury, CT 06810-5113 (US)

(72) Inventors:
• Billingham, John Fredric
Tonawanda, New York 14150 (US)
• Lockett, Michael James
Grand Island, New York 14072 (US)

(74) Representative:
Schwan, Gerhard, Dipl.-Ing.
Elfenstrasse 32
81739 München (DE)

(54) **Corrugated packing with improved capacity and high mass transfer efficiency**

(57) Improved capacity structured packing arranged in a section or brick wherein the packing section has a flat top and the packing in the base region of the section has a configuration making resistance to gas flow between the packing sheets in the base region less than resistance to gas flow between the sheets in the bulk region to increase capacity while retaining high mass transfer efficiency.

FIG. 12

EP 0 858 830 A1

## Description

### Technical Field

This invention relates to structured packing and its use for carrying out separation of a fluid mixture by countercurrent vapor-liquid contact such as the cryogenic rectification of air.

### Background Art

Distillation of a fluid mixture, e.g. air, into two or more portions enriched in a respective mixture component has generally been carried out employing one or more distillation or rectification columns which employ trays as the column internals or mass transfer elements. Recently there has developed an increasing use of structured packing as mass transfer elements in rectification columns because structured packing has a much lower pressure drop than does trays.

While structured packing has advantages over conventional trays in the operation of a distillation column, the cost of the packing is generally higher than that of the trays. The volume of packing required to effect a separation depends on the packing height and the column diameter. The latter is set by the capacity of the packing or equivalently by the flooding point wherein gas or vapor and liquid no longer effectively flow in countercurrent contact. A structured packing which has increased capacity thus enabling increased column throughput before reaching flood conditions would be very desirable.

Accordingly, it is an object of this invention to provide structured packing which enables improved performance over conventional structured packing.

It is another object of this invention to provide a structured packing for use in a rectification column having increased capacity enabling increased column throughput before reaching flood conditions.

### Summary of the Invention

The above and other objects which will become apparent to one skilled in the art upon a reading of this disclosure are attained by the present invention, one aspect of which is:

A packing section comprising a plurality of vertically oriented diagonally cross corrugated packing sheets defining a section height, said section having a base region, comprising up to the lower 50 percent of the section height, and a bulk region comprising at least some of the remainder of the section height, said packing section having a flat top, and wherein within the base region the packing sheets have a configuration such that the resistance to gas flow between the sheets in the base region is less than the resistance to gas flow between the sheets in the bulk region.

Another aspect of the invention is:

A bed comprising a plurality of vertically stacked layers, with adjacent layers rotated around a vertical axis, each layer comprising a packing section comprising a plurality of vertically oriented diagonally cross corrugated packing sheets defining a section height, said section having a base region, comprising up to the lower 50 percent of the section height, and a bulk region comprising at least some of the remainder of the section, said packing section having a flat top, and wherein within the base region the packing sheets have a configuration such that the resistance to gas flow between the sheets in the base region is less than the resistance to gas flow between the sheets in the bulk region.

The term "column" as used herein means a distillation or fractionation column or zone, i.e., a contacting column or zone wherein liquid and vapor phases are countercurrently contacted to effect separation of a fluid mixture, as, for example, by contacting of the vapor and liquid phases on packing elements. For a further discussion of distillation columns see the Chemical Engineers' Handbook, Fifth Edition, edited by R. H. Perry and C. H. Chilton, McGraw-Hill Book Company, New York, Section 13, "Distillation" B. D. Smith, et al., page 13-3 The Continuous Distillation Process. Vapor and liquid contacting separation processes depend on the difference in vapor pressures for the components. The high vapor pressure (or more volatile or low boiling) component will tend to concentrate in the vapor phase whereas the low vapor pressure (or less volatile or high boiling) component will tend to concentrate in the liquid phase. Distillation is the separation process whereby heating of a liquid mixture can be used to concentrate the volatile component(s) in the vapor phase and thereby the less volatile component(s) in the liquid phase. Partial condensation is the separation process whereby cooling of a vapor mixture can be used to concentrate the volatile component(s) in the vapor phase and thereby the less volatile component(s) in the liquid phase. Rectification, or continuous distillation, is the separation process that combines successive partial vaporizations and condensations as obtained by a countercurrent treatment of the vapor and liquid phases. The countercurrent contacting of the vapor and liquid phases can be adiabatic or nonadiabatic and can include integral (stagewise) or differential (continuous) contact between the phases. Separation process arrangements that utilize the principles of rectification to separate mixtures are often interchangeably termed rectification columns, distillation columns, or fractionation columns. Cryogenic rectification is rectification carried out, at least in part, at temperatures below 150°K.

As used herein, the term "packing" means any solid or hollow body of predetermined configuration, size and shape used as column internals to provide surface area for the liquid to allow mass transfer at the liquid-vapor interface during countercurrent flow of the two phases.

As used herein, the term "HETP" means the height of packing over which a composition change is achieved which is equivalent to the composition change achieved by a theoretical plate.

As used herein, the term "theoretical plate" means a contact process between vapor and liquid such that the exiting vapor and liquid streams are in equilibrium.

As used herein, the term "structured packing" means diagonally cross corrugated packing wherein individual members have specific orientation relative to each other and to the column axis. Examples of structured packing are disclosed in U.S. Patent No. 4,186,159-Huber, U.S. Patent No. 4,296,050-Meier, U.S. Patent No. 4,929,388-Lockett, et al. and U.S. 5,132,056-Lockett, et al.

As used herein the term "gas flow resistance" means the pressure drop experienced by the gas per unit height of packing expressed, for example, as mbar/m.

As used herein the term "section height" means the height of a packing section or unit comprised of vertically oriented diagonally cross corrugated packing sheets. This height is the difference between the horizontal plane where the vapor enters the packing unit and the horizontal plane where the vapor exits the packing unit. Each packing unit can be termed a "brick" and stacked bricks comprise the packed column.

Brief Description of the Drawings

Figures 1-5 are representations of general structured packing characteristics which are presented so as to better explain the novel structured packing arrangement of the invention and its use within a column.

Figure 6 is a generalized view showing some aspects of the invention.

Figure 7 illustrates the known structured packing arrangement within a section wherein the packing sheets are modified such as being staggered at the bottom of the section and do not form a flat top across the top of the section.

Figure 8-12 illustrate respectively different embodiments of packing sheets useful in the invention.

Figures 13-16 illustrate in graphical form results attained by use of the packing having a flat top and a modified bottom as in the invention and, for comparative purposes, results attained with known packing.

Detailed Description

In general, the invention incorporates the discovery that the capacity of structured packing, such as when used in a rectification system, may be significantly increased if the gas flow resistance in the lower region of a structured packing section is reduced from that experienced in the major portion of the structured packing section. That is, the pressure drop associated with the gas or vapor entry into the structured packing section or brick is made to be less than the pressure drop which would be experienced if the configuration of the structured packing in this lower region had the same configuration as in the upper portion of the structured packing section. This localized reduction in gas flow resistance enables an increased flow of gas or vapor up through the structured packing section before the point is reached where the upward flow of gas impedes the downward flow of liquid through the section so that flooding conditions are reached. The increased capacity of the structured packing section enables the use of less structured packing for any given separation thus reducing the cost of carrying out the separation.

The invention may be used in any distillation, absorption or stripping process, which may employ structured packing. One particularly advantageous use is in cryogenic rectification such as in the cryogenic rectification of air into nitrogen, oxygen and/or argon components. Examples of other useful distillation processes include oil fractionations, hydrocarbon separations and alcohol distillations.

The invention will be described in detail with reference to the drawings.

Distillation columns are used for a wide variety of separations in industry. Over the past decade, structured packing has become the internal of choice due to its low pressure drop and high mass transfer efficiency when compared to conventional distillation trays or random packing.

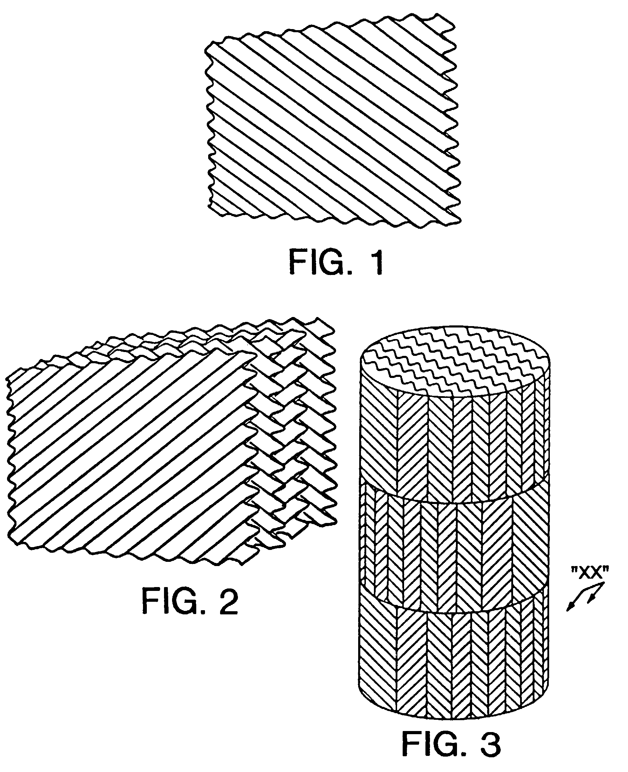

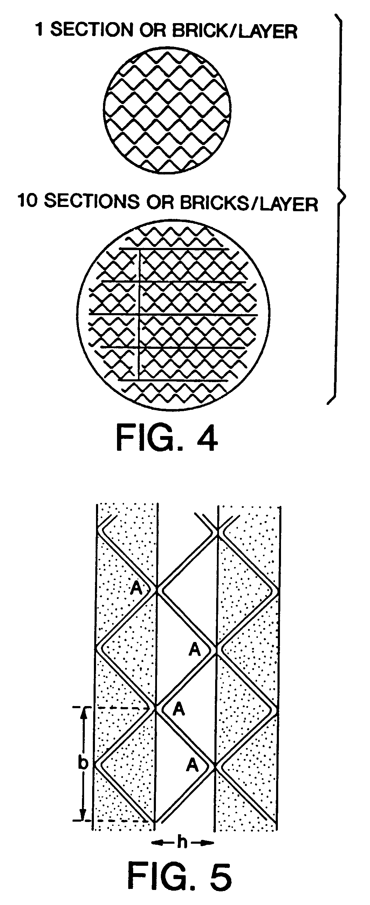

Structured packing comprises vertically oriented sheets with the corrugations at an angle to the vertical axis such as is shown in Figure 1. Sheets are arranged such that the corrugation direction of adjacent sheets is reversed as shown in Figure 2. The packing is installed in the column as layers which are generally between 6 and 12 inches in height. Adjacent layers are rotated around a vertical axis to enhance mixing as shown in Figure 3. In small columns each layer may be comprised of a single section or brick of packing formed by fixing individual sheets together using rods that pierce all of the sheets. In large columns, each packing layer may be made from several sections that fit together to fill the cross-section of the containing vessel. Figure 4 illustrates a single section layer and a layer with 10 sections. The complete packed bed comprises multiple layers of the packing, the number of layers being set by the height of packing required to perform the separation. Figure 5 shows a view through the packing denoted as XX on Figure 3 inclined at the same angle to the vertical as the corrugations. The corrugations are characterized by the crimp height, h, and the base length, b. The corrugation pattern shown is sharp (saw-tooth) but it may also be rounded (sinusoidal). The sheets touch each other at contact points along the peaks and valleys of the corrugation, denoted by A in Figure 5.

While all corrugated sheet structured packings share the above-described features, there are a large number of variations available commercially. Variations include the use and size of perforations in the packing sheets and the type of surface texture applied to the sheets. Packing is made in several sizes as characterized by the specific surface area (area of surface per unit volume). Different sizes are achieved by variation of the crimp height, h, and the base length, b. For example, reducing the crimp height increases the surface area per unit volume. The use of higher specific surface area packing reduces the height of packing required for a given separation but allowable fluid velocities are decreased. Thus a larger cross-sectional area for flow is required.

The height of the packing is calculated from the product of the number of equilibrium stages required and the height of an equivalent theoretical plate (HETP). The HETP is a measure of the mass transfer efficiency. The cross-sectional area of the column is dictated primarily by the vapor and liquid flowrates and densities. Typically, columns are designed to operate between 80 and 90 percent of the flowrates at the flood point for the packing in question. The flood point may be considered as the maximum vapor flowrate at a fixed liquid flowrate at which the column is operable. Physically, it occurs when the vapor loading is such that the liquid can no longer flow countercurrently under gravity against the vapor. Generally higher specific surface area packings have a lower flood point because the dimensions available for flow between the sheets are smaller.

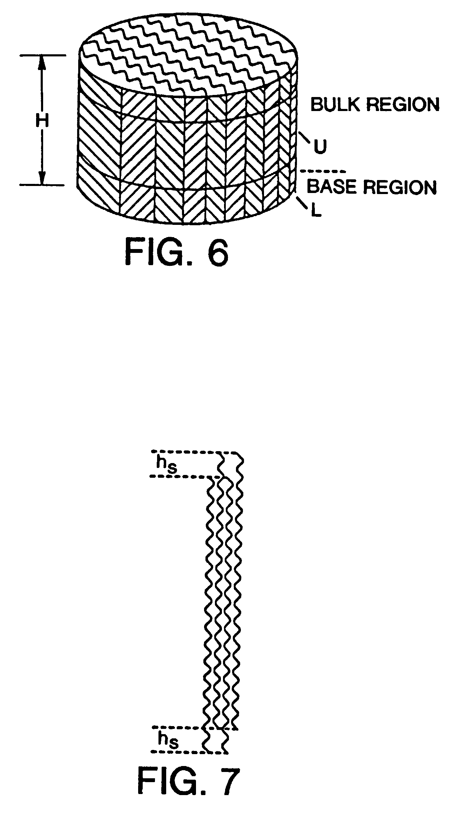

The invention comprises a configured structured packing section that reduces the pressure drop associated with the vapor entry into the packing section and thus eases the passage of liquid from the section. The terms gas and vapor flowing through the structured packing section are used synonymously herein. This pressure drop reduction is achieved by configuring the structured packing sheets in the region at the base of each section which is generally between 0.1 and 20 times h in height (denoted by region L in Figure 6) such that the geometry in the base region, L, differs from that of the bulk region (denoted by U in Figure 6) which is defined as that region above the base region. A cylindrical brick or section is shown in Figure 6 but any brick shape may be used with the invention. Base region L may comprise up to the lower 50 percent of the height H of the structured packing brick or section and preferably comprises the lower 5 percent of the height H and most preferably comprises the lower 2.5 percent of the height H.

Structured packing such as is shown in Figures 1-4 comprises corrugated sheets stacked vertically and usually connected using one or more rods that extend through the packing to make a section. These sections are typically 6 to 12 inches in height. A packing layer is equal to the section height and extends over the column cross-section which is typically circular. Generally, in conventional practice the packing sheets are substantially uniform in height and have straight cut edges such that the base and top of each section or brick are essentially flat. The bricks are stacked one on top of the other.

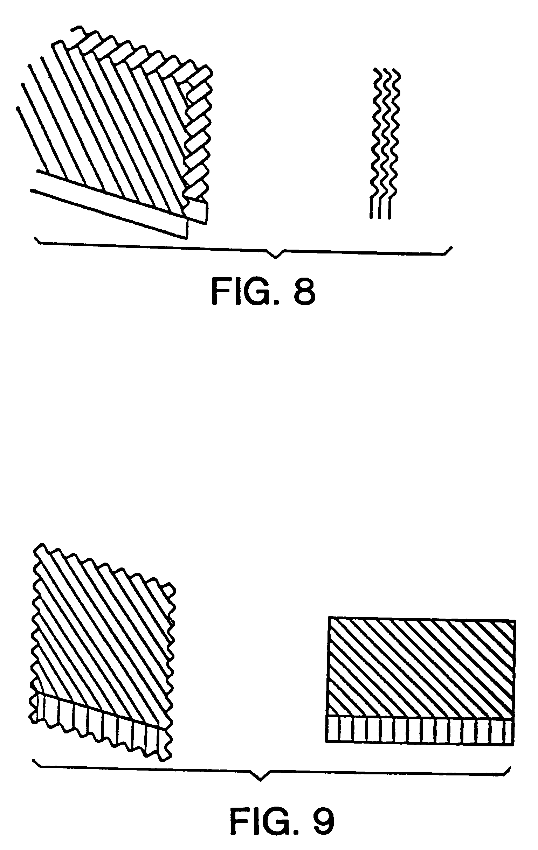

Figure 7 illustrates in an edge view a packing arrangement wherein sheets that constitute the section are cut to the required length and then alternately staggered in a vertical direction when placed together to form the brick. In this manner, one half of the sheets extend to the bottom of the section and the other half to the top of the section and neither the top nor the bottom of the section is flat. That is, while the packing shown in Figure 7 forms a section having a modified bottom wherein within the base region a first plurality of packing sheets extend beyond the edges of a second plurality of packing sheets in alternating sequence whereby resistance to gas flow between the sheets in the base region is less than the resistance to gas flow between the sheets in the bulk region, it does not have a flat top as required for the practice of this invention. The modified bottom shown in Figure 7 may be used in conjunction with the embodiments of the invention illustrated in Figures 8-12.

Figures 8-12 each illustrate different embodiments of the modified base region of the packing useful in the practice of this invention which enables the achievement of lower resistance to gas flow between the sheets in the base region than in the bulk region.

One means for reducing the pressure drop associated with gas entry into the brick is to arrange for the gas to take a less tortuous flow path. This may be achieved by reducing the number of contact points (indicated by A in Figure 5) between neighboring sheets, thus opening the structure and promoting a more vertical flow path. This reduces both the gas velocity and path length for the gas relative to the unmodified packing. Examples of this embodiment are shown in Figures 8 and 9. Figure 8 shows a packing in perspective and edge views with all sheets having a reduced crimp height, in this case a crimp height reduced to zero, in the base region. That is, the sheets illustrated in Figure 8 have a flattened base. In Figure 9 there is illustrated an embodiment in perspective and face views wherein the base region has the same crimp height as the bulk region but has corrugations at a steeper angle. This reduces the actual gas velocity and thus the pressure drop in the gas region of the packing.

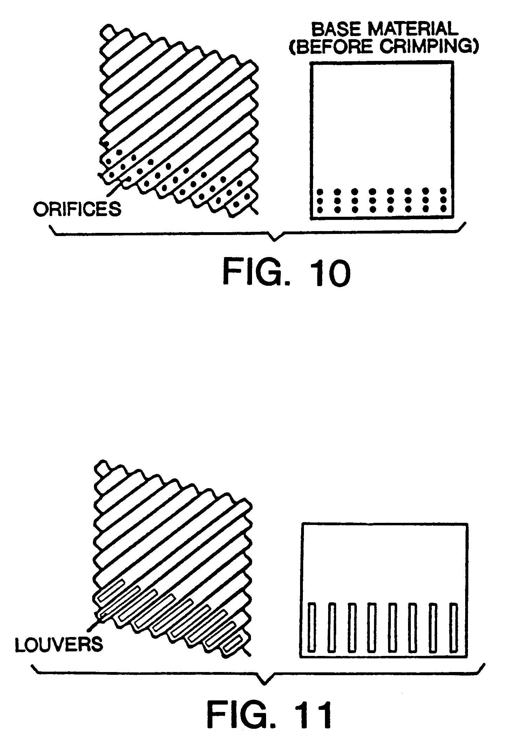

In Figures 10 and 11 there are illustrated embodiments wherein the fractional open area of the material is significantly increased over the bulk of the packing preferably by at least 20 percent. This may be achieved through increased perforations, louvers, notches or slots. All of the above will allow passage of vapor through them, resulting in a more vertical flow of vapor and a lower pressure drop in the base region than in the bulk region. Packing sheets having increased perforations in the base region are illustrated in Figure 10 and packing sheets having louvers in the base region are illustrated in Figure 11.

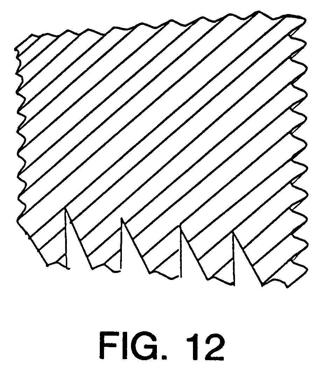

Figure 12 illustrates a packing sheet having a sawtooth or notched base region which reduces gas flow resistance in the base region but wherein the sawteeth are blunted so as to form a packing section having flattened bottom which will enable easier stacking of one section upon the other in order to achieve the full benefits of the flat top of the packing section of this invention. This packing having blunted serrated edges in the base region of the packing sheet is particularly preferred in the practice of this invention.

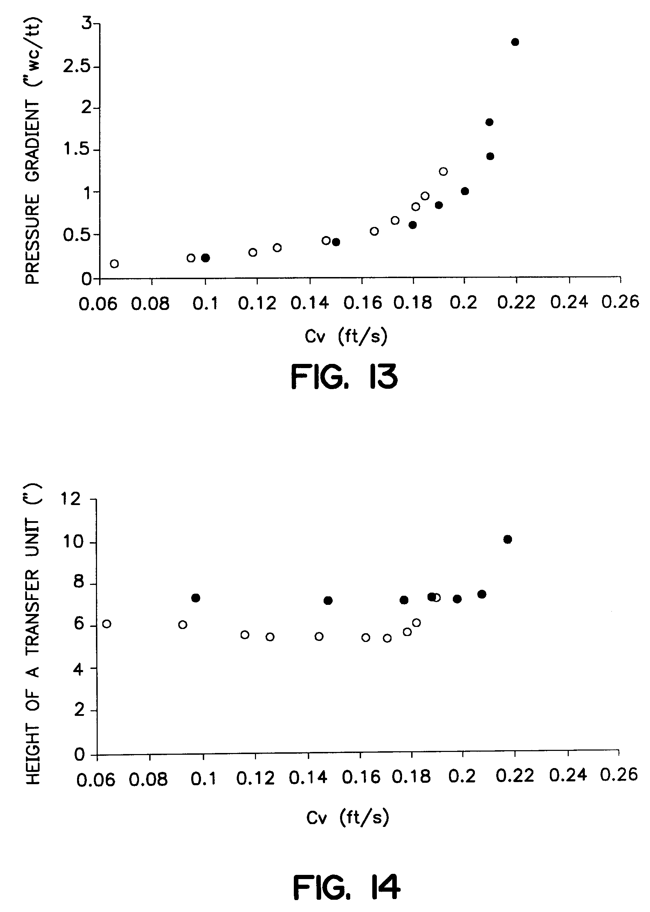

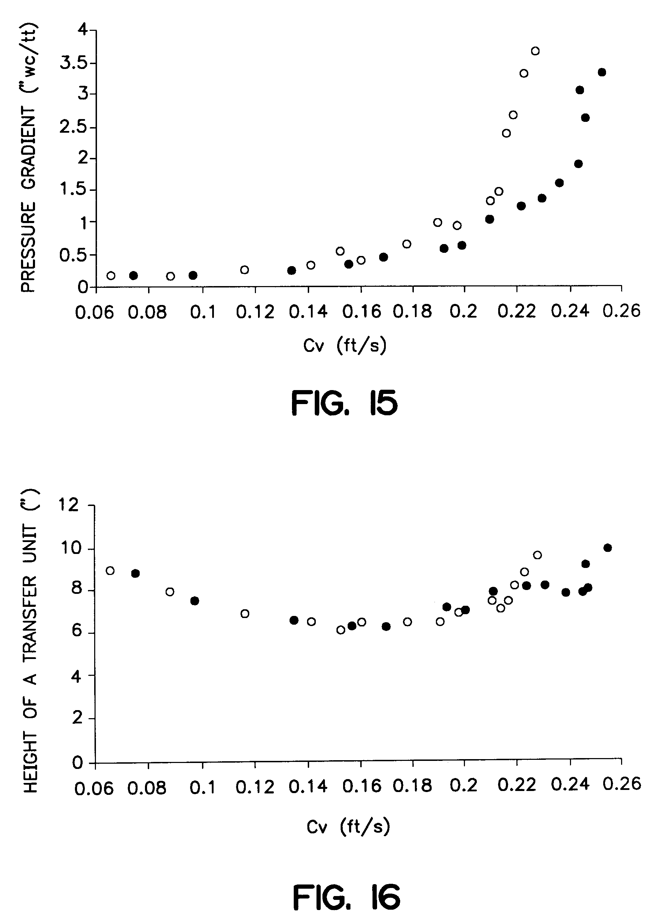

Distillation tests were carried out with a structured packing having sheets alternately staggered in the vertical direction, such as shown in Figure 7, by an amount equivalent to the crimp height. For comparison, an otherwise identical packing was used in which the alternating sheets were not staggered, i.e. the packing sections had a flat top but an unmodified base region. The packings had a specific surface area of 750 m²/m³. The distillation column was 12 inches in diameter. The height of each packing layer was approximately 10". Ten layers were used in the unstaggered case and nine layers in the staggered case. The distillation system was oxygen-argon operated at total reflux and at a pressure 22 psia. The results are shown in Figures 13 and 14 wherein the solid dots represent data points from the tests using the staggered packing sheets and the open dots represent data points from the tests using the packing sections having both flat tops and flat bottoms. In the graphs "is used to denote inches and "WC is used to denote inches of water column. Figure 13 shows that the packing with the alternating staggered sheets had a lower pressure drop and increased capacity over the packing with non-staggered sheets. Figure 14 shows the surprising result that the Height of a Transfer Unit, (HTU), of the packing with alternating staggered sheets was significantly higher than the HTU of the packing with non-staggered sheets. Thus the packing with alternating staggered sheets had poorer mass transfer performance than the packing with non-staggered sheets.

The HTU is a fundamental descriptor of packing mass transfer performance that is described in any standard text on the subject. It is related to the Height of an Equivalent Theoretical Plate at total reflux by the simple relation;

$$HETP = HTU \left( \frac{\ln(m)}{m-1} \right)$$

where $m$ is the slope of the equilibrium line.

It is believed that the reason for the relatively poor mass transfer performance of the packing with alternating staggered sheets is that alternate sheets do not contact the base of the packing section immediately above. Liquid which flows from the upper section is unable to flow over those alternate sheets which, because of the stagger, are not in contact with the packing section above. Liquid flows from the upper packing section to the lower packing section only along those alternate sheets in the lower section which are in contact with the upper section. As liquid flows down the sheets it gradually crosses to adjacent sheets via contact points A in Figure 5. However there remains a region of each alternate sheet which is not properly wetted at its top in each packing section and these result in reduced mass transfer and an increased HTU.

The invention which overcomes this problem employs a packing wherein the top of each section is flat. Tests similar to those discussed above were conducted with two sets of packing having a specific surface area of approximately 500 m²/m³. One set of packing had sheets of height 8 inches with a flat top and an unmodified base region. The other had sheets which formed a section having a flat top and modified base region wherein resistance to gas flow in the base region was less than resistance to gas flow in the bulk region. The packings were otherwise identical. The same distillation system was used to determine the HTU and pressure drop of the two packings.

The results are shown in Figures 15 and 16 wherein the solid dots represent data points from tests using the packing sheets of the invention and the open dots represent data points from tests using the packing sections having flat tops but unmodified base regions. Figure 15 shows that the pressure drop was lower for the packing of the invention and it had about 15% more capacity before flooding occurred. Figure 15 shows that the HTU of the packings were similar up to the flood point of the conventional packing. The use of a packing of the invention with flat sections at the top overcame the poor separation performance found when the packing section was staggered at the top.

The comparison of Figures 13 and 14 shows that staggering both the top and bottom of a packing section leads to a capacity increase (Figure 13) but causes a mass transfer decrease (Figure 14). However, when only the bottom of a packing section is modified, then the same capacity increase is achieved (Figure 15) but without any mass transfer decrease (Figure 16). The packing having a modified base region used to generate the test results reported in the graphs had a modified base region comprising staggered packing sheets. However, it is believed that any modified base region of packing as defined for use in this invention would generate similar results. Moreover, the packing section of this invention may also have a staggered base region, as shown in Figure 7, although it must have a flat top. That is, the packing section of this invention may have a flat or non-flat bottom.

In the practice of the invention it is expected that the gas flow resistance in the base region of the structured packing section will be at least 10 percent, and preferably at least 20 percent, less than the gas flow resistance in the bulk region of the structured packing section.

Although it is preferable that the conditions and arrangements described herein for the base region and the bulk region occur throughout these respective regions, the particular conditions and arrangements may occur in only portions of these respective regions.

Although the invention has been described in detail with reference to certain preferred embodiments, those skilled in the art will recognize that there are other embodiments of the invention within the spirit and the scope of the claims.

**Claims**

1. A packing section comprising a plurality of vertically oriented diagonally cross corrugated packing sheets defining a section height, said section having a base region, comprising up to the lower 50 percent of the section height, and a bulk region comprising at least some of the remainder of the section height, said packing section having a flat top, and wherein within the base region the packing sheets have a configuration such that the resistance to gas flow between the sheets in the base region is less than the resistance to gas flow between the sheets in the bulk region.

2. The packing section of Claim 1 wherein the bulk region comprises all of the remainder of the section height.

3. The packing section of Claim 1 wherein the base region comprises the lower 5 percent of the section height.

4. The packing section of claim 1 wherein the packing sheets have corrugations in the base region which are steeper than the corrugations in the bulk region.

5. The packing section of claim 4 wherein within the base region a first plurality of packing sheets extend beyond the edges of a second plurality of packing sheets in alternating sequence.

6. The packing section of claim 1 wherein the fractional open area of the packing section in the base region exceeds the fractional open area of the packing section in the bulk region.

7. The packing section of claim 6 wherein the packing sheets in the base region contain perforations.

8. The packing section of claim 6 wherein the packing sheets in the base region have blunted serrated edges.

9. The packing section of claim 6 wherein within the base region a first plurality of packing sheets extend beyond the edges of a second plurality of packing sheets in alternating sequence.

10. A bed comprising a plurality of vertically stacked layers, with adjacent layers rotated around a vertical axis, each layer comprising a packing section comprising a plurality of vertically oriented diagonally cross corrugated packing sheets defining a section height, said section having a base region, comprising up to the lower 50 percent of the section height, and a bulk region comprising at least some of the remainder of the section, said packing section having a flat top, and wherein within the base region the packing sheets have a configuration such that the resistance to gas flow between the sheets in the base region is less than the resistance to gas flow between the sheets in the bulk region.

FIG. 1

FIG. 2

"XX"

FIG. 3

1 SECTION OR BRICK/LAYER

10 SECTIONS OR BRICKS/LAYER

# FIG. 4

# FIG. 5

FIG. 6

FIG. 7

FIG. 8

FIG. 9

BASE MATERIAL
(BEFORE CRIMPING)

ORIFICES

## FIG. 10

LOUVERS

## FIG. 11

# FIG. 12

FIG. 13

FIG. 14

FIG. 15

FIG. 16

**European Patent Office**

**EUROPEAN SEARCH REPORT**

Application Number

EP 98 10 2458

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 707 885 A (PRAXAIR TECHNOLOGY, INC.) 24 April 1996 * the whole document * | 1-7,9,10 | B01J19/32 |
| A | | 8 | |
| A | US 5 154 859 A (MAURICE BOSQUAIN ET AL.) 13 October 1992 * abstract * * column 4, line 14 - line 24 * * figure 11 * | 8 | |

TECHNICAL FIELDS
SEARCHED      (Int.Cl.6)

B01J

The present search report has been drawn up for all claims

| Place of search | Date of completion of the search | Examiner |
|---|---|---|
| THE HAGUE | 20 May 1998 | Stevnsborg, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document